(19) Europäisches Patentamt / European Patent Office / Office européen des brevets

(11) **EP 2 232 757 B1**

(12) **EUROPEAN PATENT SPECIFICATION**

(45) Date of publication and mention
of the grant of the patent:
**28.09.2011 Bulletin 2011/39**

(51) Int Cl.:
*H04L 5/00* (2006.01)    *H04L 5/02* (2006.01)

(21) Application number: **09702125.7**

(22) Date of filing: **13.01.2009**

(86) International application number:
**PCT/JP2009/050605**

(87) International publication number:
**WO 2009/091056 (23.07.2009 Gazette 2009/30)**

(54) **OFDMA frame structures for uplinks in MIMO networks**

OFDMA-Rahmenstrukturen für die aufwärts Strecke in MIMO-Netzwerken

Structures de trame OFDMA pour liaisons montantes dans des réseaux MIMO

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **16.01.2008 US 21366**
**29.09.2008 US 240164**

(43) Date of publication of application:
**29.09.2010 Bulletin 2010/39**

(73) Proprietor: **Mitsubishi Electric Corporation**
**Tokyo 100-8310 (JP)**

(72) Inventors:
• **ORLIK, Philip, V.**
**Cambridge**
**Massachusetts 02140 (US)**
• **MOLISCH, Andreas, F.**
**Arlington**
**Massachusetts 02474 (US)**
• **TAO, Zhifeng**
**Allston**
**Massachusetts 02134 (US)**
• **ZHANG, Jinyun**
**Cambridge**
**Massachusetts 02141 (US)**

(74) Representative: **Pfenning, Meinig & Partner GbR**
**Patent- und Rechtsanwälte**
**Theresienhöhe 13**
**80339 München (DE)**

(56) References cited:
**WO-A1-2006/011753**

• **MARKS, R. ET AL.: "892.16m Frame Structure to Enable LEgacy Support, Technology Evolution and Reduced Latency" IEEE 802.16 BROADBAND WIRELESS ACCESS WORKING GROUP, [Online] 7 November 2007 (2007-11-07), pages 1-7, XP002521329 Retrieved from the Internet: URL: http://www.ieee802.org/16/tgm/contrib/ C80216m-07_263.pdf> [retrieved on 2009-03-26]**
• **AHMADI, S.: "Views on IEEE 802.16m Frame Structure" IEEE 802.16 BROADBAND WIRELESS ACCESS WORKING GROUP, [Online] 12 November 2007 (2007-11-12), pages 1-6, XP002521330 Retrieved from the Internet: URL: http://www.ieee802.org/16/tgm/contrib/ C80216m-07_354.ppt> [retrieved on 2009-03-26]**
• **"OFDMA FRame Structures with Scalable Bandwidth and High-Mobility Support for IEEE 802.16m" IEEE 802.16 BROADBAND WIRELESS ACCESS WORKING GROUP, [Online] 11 November 2007 (2007-11-11), pages 1-12, XP002521331 Retrieved from the Internet: URL: http://www.ieee802.org/16/tgm/contrib/ C80216m-07_295r1.doc> [retrieved on 2009-03-26]**
• **"Proposal for Incorporating Single-Carrier FDMA into 802.16m" IEEE 802.16 BROADBAND WIRELESS ACCESS WORKING GROUP, [Online] 7 November 2007 (2007-11-07), XP002521332 Retrieved from the Internet: URL:http://www.ieee802.org/16/tgm/contrib/ C80216m-07_239.pdf> [retrieved on 2009-03-26]**

• "Single Carrier Uplink Frame Format" IEEE 802.16 BROADBAND WIRELESS ACCESS WORKING GROUP, [Online] 16 January 2008 (2008-01-16), pages 1-5, XP002521333 Retrieved from the Internet: URL:http://www.ieee802.org/16/tgm/contrib/ C80216m-08_056r1.doc> [retrieved on 2009-03-26]

## Description

## Technical Field

This invention relates generally to the field of wireless communications, and more particularly to the uplink transmission in cellular communication networks from user terminals to base stations, and more particularly to single carrier multiple-input multiple-output (MIMO) orthogonal frequency division multiplexing (OFDM), and MIMO-orthogonal frequency division multiple access (OFDMA) schemes.

## Background Art

The IEEE 802.16 standard "Part 16: Air interface for Broadband Wireless Access Systems" 802.16, upon which WiMAX is based, employs orthogonal frequency division multiple access (OFDMA) in an uplink from a user terminal to a base station. In OFDMA, each user terminal (transceiver or mobile station) sends data to the base station on a set of assigned sub-carriers on which the transmitter modulates data symbols. Multiple access among several terminals is achieved by allocating disjoint sets of sub-carriers to the terminals. Thus, each uplink OFDMA symbol contains data from several mobile stations on disjoint sets of sub-carriers.

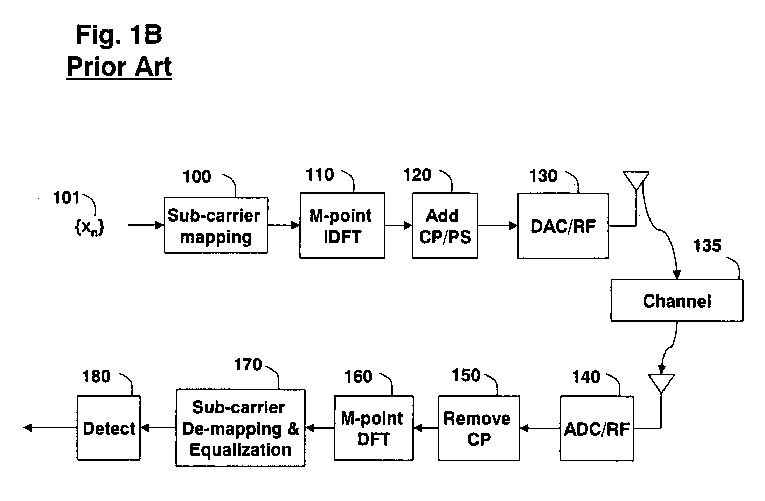

Figure 1B shows a conventional OFDMA transmitter and receiver. This structure is currently used in networks designed according to the IEEE 802.16 standard. The transmitter starts by grouping complex valued modulation symbols 101 $\{x_n\}$, $n$ = 0, 1, 2,..., $N$. The grouped modulation symbols are mapped and modulated 100 to $N$ of $M$ orthogonal subcarriers via an $M$-point inverse discrete Fourier transform (IDFF) operation 110.

The input to the inverse discrete Fourier transform (IDFT) block 110 is a set of $M$ complex valued symbols, of which $M$-$N$ are zero. The remaining $M$-$N$ sub-carriers are used by other mobile stations. This signal processing is conventional for OFDM transmission and includes adding a cyclic prefix (CP) 120, and then converting (DAC) 130 the baseband digital signal to analog radio frequency signals, 130, amplifying and transmitting over a wireless channel 135.

At the receiver, the received RF signal is converted (ADC) 140 to baseband and sampled to generate a baseband digital signal. The digital signal is processed to remove 150 the cyclic prefix, and then converted back to the frequency domain via an $M$-point DFT 160. The signal is equalized 170 to mitigate the effects of the wireless channel, and the individual user data can be separated by de-mapping the sub-carriers, i.e., detecting 180 the data on N sub-carriers associated with particular users.

An alternative, but similar transmission technique, is called single carrier frequency division multiple access (SC-FDMA). This technique is currently under consideration for use in the uplink of 3GPP, "3rd Generation Partnership Project; Technical Specification Group Radio Access Network; Physical layer aspects for evolved Universal Terrestrial Radio Access (UTRA)," Release 7. SC-FDMA is described in detail by H.G. Myung et al. in "Single Carrier FDMA for Uplink Wireless Transmission," IEEE Vehicular Technology Magazine, Sept. 2006, pp. 30-38.

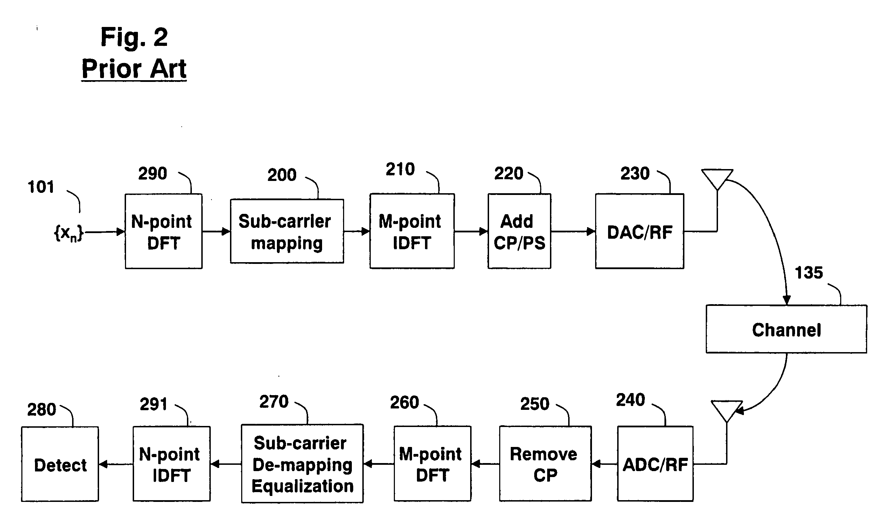

Figure 2 shows a conventional SC-FDMA transmitter and receiver. This is essentially, the same structure as in Figure 1B, except for the presence of an additional $N$-point discrete Fourier transform (DFT) 290 in the transmitter, and an $N$-point IDFT 291 in the receiver. The DFT 290 spreads the user data over all the $N$ assigned sub-carriers of the OFDM symbol. In contrast, in the OFDMA transmitter of Figure 1B, each individual data symbol $x_n$ is carried on a single sub-carrier according to the $M$-point IDFT.

The descriptions of the OFDMA and SC-FDMA techniques show the similarities between the two techniques. Both OFDMA and SC-FDMA transmit a sequence of OFDM symbols, where the individual sub-carriers are assigned to multiple user terminals. In both cases, the transmitted signal can be thought of as a two dimensional signal occupying both the time and frequency domains.

Regulatory domains, e.g., governmental agencies, such as the FCC in the U.S or the ETSI in Europe, may place restrictions on the type of wireless technologies used in the RF spectrums. Additionally, market acceptance of competing standards, e.g., WiMAX or 3GPP LTE, may further partition the wireless spectrum into areas where one service provider supports either OFDMA or SC-FDMA.

Document Marks, R. et al.: "802.16m Frame Structure to Enable Legacy Support, Technology Evolution and Reduced Latency", IEEE 802.16 BROADBAND WIRELESS ACCESS WORKING GROUP, 7 November 2007, pages 1-7, discloses a proposal for a new frame structure in the standard 802.16. The new frame allows the partition of the UL in a legacy field portion and in a Greenfield portion.

The document WO2006/011753, discloses an OFDM/TDMA system that allocates all sub-carriers in an entire bandwidth to one user during a predetermined time period and then allocates all subcarriers to another user during the next predetermined time period.

## Disclosure of Invention

Therefore, it is desired to deploy both transmission techniques within the same cellular network.

The invention provides a method for combining OFDMA with SC-FDMA in a wireless network, as per claim 1.

Further aspects are contemplated in the dependent claims.

## Brief Description of Drawings

Figure 1A is a schematic of a wireless network used by embodiments of the invention;

Figure 1B is a block diagram of a conventional OFDMA transceiver;

Figure 2 is a block diagram of a conventional SC-FDMA transceiver;

Figure 3 is a block diagram of a conventional frame structure;

Figure 4 is a block diagram of frame structures according to embodiments of the invention;

Figures 5-6 are block diagrams of SC-FDMA sub-carrier mappings according to embodiments of the invention;

Figure 7 is a block diagram of frame structures according to embodiments of the invention; and

Figure 8 is a block diagram of a SC-FDMA transceiver according one embodiment of the invention.

## Best Mode for Carrying Out the Invention

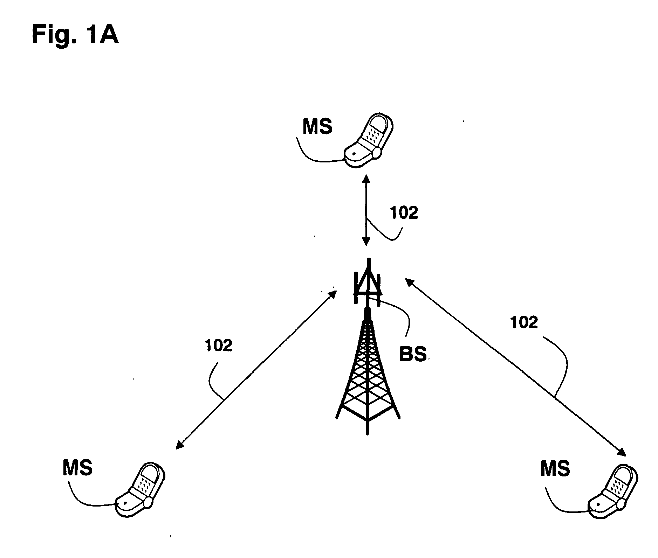

Figure 1A shows a cellular network used by embodiments of the invention, e.g., a wireless network according to the IEEE 802.16/16e standard. The network includes a base station (BS), and mobile stations (MS). Each station includes a transmitter and a receiver, i.e., a transceiver, as described below. The BS manages and coordinates all communications with the MS in a particular cell over channels.

The network as shown is different in that the stations and channels support both orthogonal frequency division multiple access (OFDMA), and single carrier frequency division multiple access (SC-FDMA) on uplink and downlink channels 102.

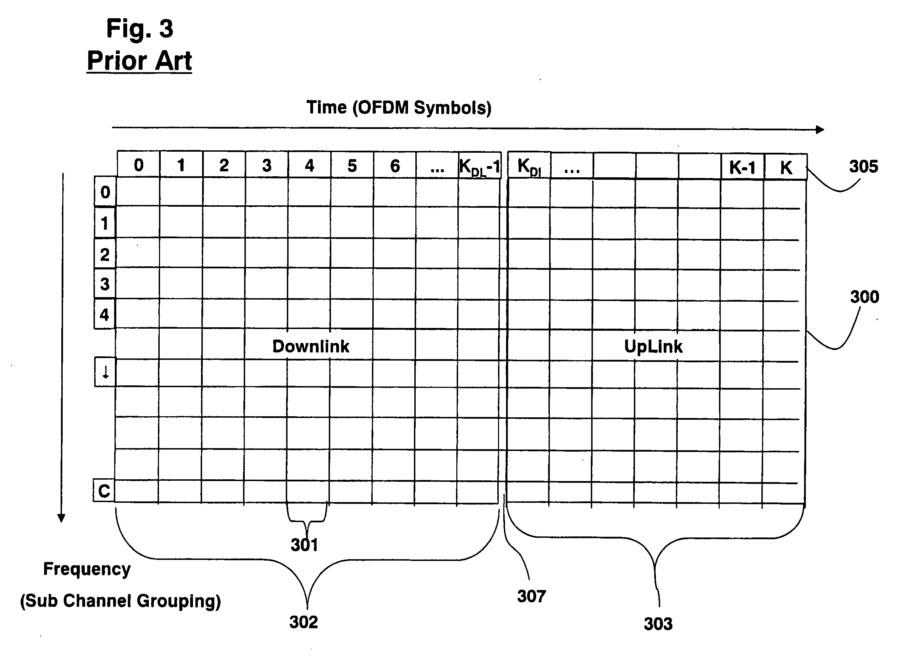

Figure 3 shows a conventional frame structure used in cellular network only using OFDM. The horizontal axis indicates time, and the vertical axis indicates frequency sub-channel groupings. A frame 300 is defined as a group of time consecutive $K+1$ OFDM symbols 305, where the OFDM symbols are indexed from 0 to $K$. Each OFDM symbol uses a set of $C+1$ parallel orthogonal frequency sub-channels indexed from 0 to $C$. Thus, a single column 301 of the time-frequency plane shown in Figure 3 is a single OFDM symbol.

The sub-channels may represent individual sub-carriers of the OFDM network, in this case $C = M$, i.e., the size of the IDFT in Figures 1B and 2. Alternatively, a group of sub-carriers can be assigned for a particular transmission. The latter is the case in the IEEE 802.16 standard. In any event, the definition of a frame as a group of consecutive OFDM symbols holds.

In a time division duplex (TDD) network, the OFDM symbols are further partitioned into an *uplink* subframe 302, and a *downlink* subframe303. In general, the first $K_{DL}$ symbols are allocated for downlink transmission from a base station to terminals, while the remaining $K$-$K_{DL}$ symbols are allocated for uplink transmissions from the terminals to the base station.

A small time gap 307 between the $(KDL\text{-}1)^{th}$ symbol and $(K_{DL})^{th}$ symbol may be needed, in order to allow the terminals sufficient time to switch between transmit and receive modes. A time gap between two consecutive frames may also be needed for similar reason.

It is assumed that the downlink subframe also contains a certain number of OFDM control symbols that are reserved for broadcasting control information. Typically, the base station transmits control information including, sub-channel assignments, and schedule information for the remainder of the downlink and uplink subframes to its associated terminals using these OFDM control symbols.

A majority of recent wireless cellular standards have adopted OFDMA transmission. We focus on the uplink subframe. As described above, both OFDMA and SC-FDMA have essentially the same signal structure based on OFDM, with the only difference being that SC-FDMA performs additional frequency spreading across the sub-carriers.

Therefore, the base station can be modified to either directly detect data after the sub-carrier demapping and equalization 170, or to perform an additional despreading 291.

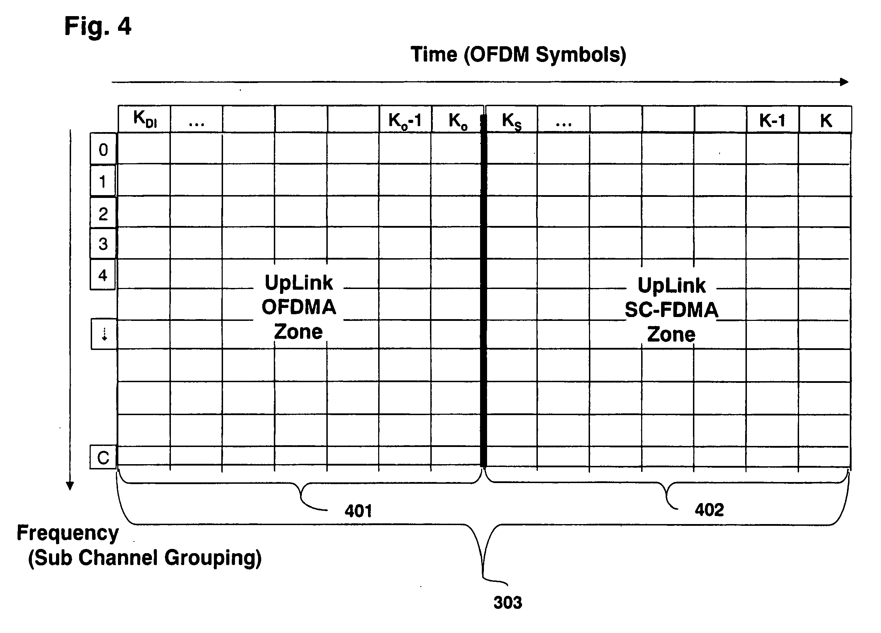

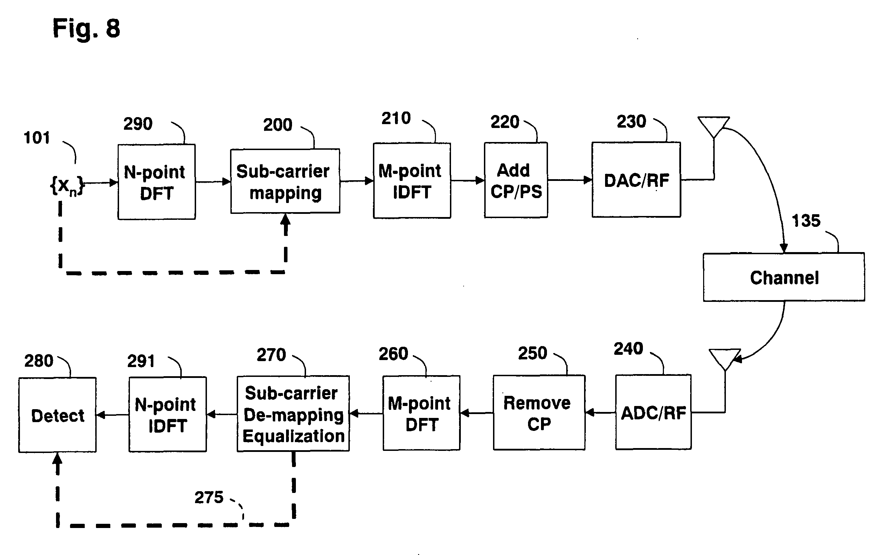

We modify the uplink portion of the frame structure as shown in Figures 4 and 8 to enable the base station to support both OFDMA and SC-FDMA mobile stations in the same cell.

Figure 4 shows a modified uplink frame structure 303 according to an embodiment of the invention. The uplink subframe has been partitioned into two portions, or *zones* 401-402. Zones are defined generally in the IEEE 802.16 standard.

According to the embodiments of the invention, a first zone 401 is used exclusively for OFDMA transmission from mobile terminals, and a second zone 402 is used exclusively for SC-FDMA transmissions from the mobile terminals.

The arrangement, i.e., the ordering of the OFDMA and SC-FDMA zone, and their relative sizes, i.e., number of constituent OFDM symbols, can be arbitrary. The capabilities of the terminals, with respect to OFDMA and SC-FDMA, are typically exchanged with the base station during the network entry, re-entry and hand over when a mobile station changes cells. The base station can allocate the size of the zones based on the number of terminals that are capable of the respective OFDMA and SC-FDMA transmission.

The K-KDL symbols that make-up the entire uplink subframe can be partitioned by specifying an indexed of a starting symbol and a length or number of consecutive symbols. The starting symbol index for the OFDMA zone 401is denoted as $K_{Oi}$ and its length, in units of OFDM symbols) is denoted $K_{Ol}$.

Likewise for the SC-FDMA zone 402, $K_{Si}$ , $K_{Si}$ denote the starting symbol index and zone length respectively. The values of the $K_{Oi}$, $K_{Ol}$, $K_{Si}$ , $K_{Si}$ are variable and can be determined by the base station on a frame-by-frame basis. The determination can be based on the number of terminals that support OFDMA or SC-FDMA, and the amount of traffic generated by the various terminals. After the variables $K_{Oi}$, $K_{Ol}$, $K_{Si}$ , $K_{Si}$ are determined, the control symbols for the variables are transmitted to terminals during the broadcast of control information in a downlink subframe.

## Sub-Carrier Mapping Considerations

As an advantage, SC-FDMA has a lower peak to average power ratio (PAPR) than OFDMA. This enables the mobile station to extend its transmission range. This reduction in PAPR does come with some constraints in the way that sub-carrier mapping is performed. Therefore, within the SC-OFDMA zone 402, sub-carrier mapping is done in such a way as to achieve a reduction in PAPR. We described two approaches to this mapping. One is termed *interleaved*, and the other is termed *contiguous*.

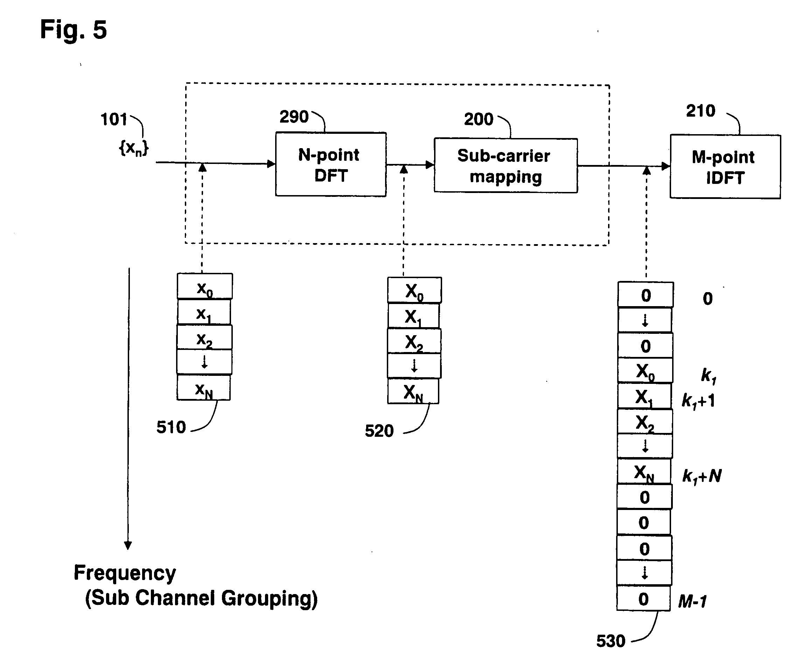

Figure 5 shows a sequence of symbols $\{x_n\}$ 510 and the N-point DFT 290 and the sub-carrier mapping 200. At the output of the N-Point DFT, we have $N$ frequency symbols 520 that can be mapped onto $M$ sub-carriers. In contiguous mapping, the sequence $x_n$ $\{n = 0, 1, ..., N\text{-}1\}$ is mapped to a set of sub-carriers indexed by $k$, which is a sequence of $N$ consecutive integers $\{k = k_1, k_1+1, k_1+2, ..., k_1+N\}$ 530. The remaining $M\text{-}N$ inputs of the $M$-Point IDTF are set to zero, and thus can be assigned to other terminals in the network.

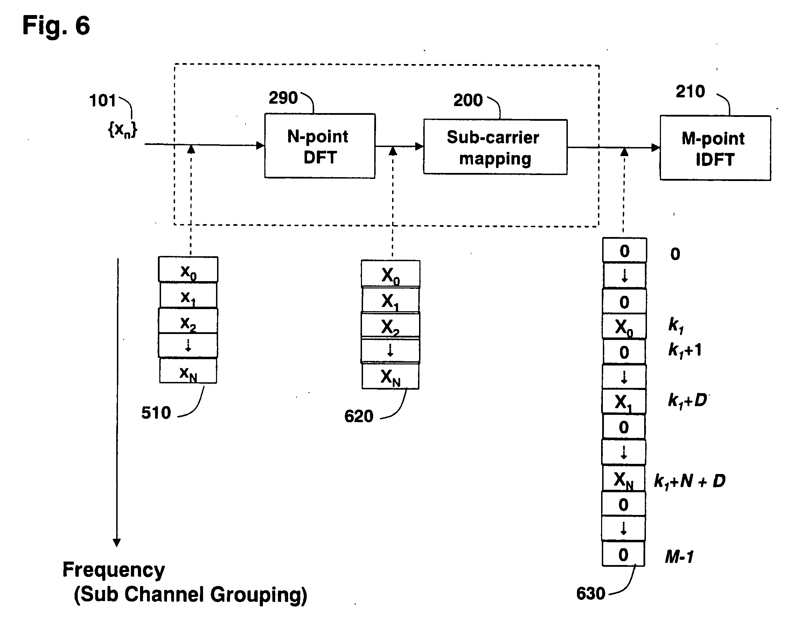

Figure 6 shows an example of the interleaved mapping. In this case, the N outputs 620 from the DFT block 290, are mapped to a non-contiguous set of sub carriers 630 indexed by $\{k = k_1, k_1 + D, k_1 + 2^*D, ... k_1 + N + D\}$, where D is a fixed number that represents the spacing between allocated sub-carriers. Thus, the input to the $M$-point IDFT 210 includes regularly spaced non-zero inputs. The remaining terminals can be assigned to the $M\text{-}N$ carriers, which results in an interleaving of user data over the sub-carriers.

The most efficient use of the $M$ sub-carriers results when $N$ is an integer divisor of $M$. Thus, we can

$$\text{assign all } M \text{ sub-carriers to } \frac{M}{N} = U \quad \text{terminals. In this}$$

case, the interleaved mapping leads to $D = U$.

### SC-FDMA with $N = M$

In one embodiment, a frame structure can be considered for SC-FDMA uplink transmission when $N = M$. In this case, the sizes of the DFT and IDFT are the same and we can view this as a frequency spreading case in which data from the terminal is spread over the entire bandwidth of an OFDM symbol. Multiple access in this case is not achieved by assigning sub-carriers within a single OFDM symbol because an entire symbol is used by each user terminal. Rather the base station assigns transmission slots to each terminal, wherein each slot is a single OFDM symbol with $M$ subcarriers all carrying data for one terminal.

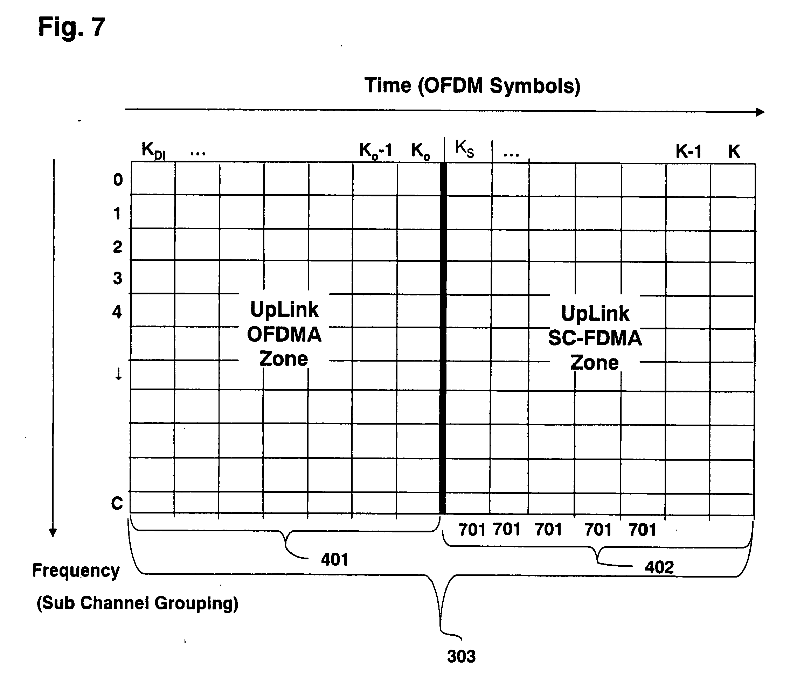

Figure 7 shows the uplink subframe 303 with this multiple access scheme. The subframe is partitioned into the OFDMA zone 401 and the SC-FDMA zone 402. In the SC-FDMA zone 402, the base station assigns entire column of OFDM symbols 701, i.e., all subcarriers, to a terminal and the terminal spread their data according to Figure 2.

This technique has two benefits. First, it achieves a minimal PAPR for all schemes. Second, terminals are able to reduce power because the terminal can transmit at much higher data rates compared to the other multiple access and mapping techniques.

In addition, a terminal can compress all of its transmission into a minimal amount of time, and then enter a sleep or idle state, which consumes less power, while the terminal waits for the next downlink or uplink subframe.

### Per Terminal SC-FDMA

The above described embodiments all partition the uplink subframe 303, where SC-FDMA transmissions are segregated from OFDMA transmissions. This segregation is not strictly necessary for the coexistence of OFDMA and SC-FDMA in the same cell.

As shown in Figures **1B** and 2, the only difference between the two transmission schemes is the extra step of spreading data with the DFT 290 in the case of SC-FDMA. The SC-FDMA receiver despread with the IDFT operation 291.

Thus, as shown in Figure 8, the base station can serve both OFDMA and SC-FDMA terminals within a single zone by selectively spreading and despreading sub-carriers that are assigned to SC-FDMA terminals. That, in the case of OFDMA the spreading and despreading is by-passed 275, as shown by the dashed lines.

Because the base station is responsible for allocating sub-carriers and symbols to terminals, the BS can select to despread via an additional IDFT. During the transmission of the broadcast control information at the beginning of the downlink subframe, the base-station signals the individual terminals that they should implement an N-point DFT spreading operation of their data over their assigned sub-carriers.

The signal can be a single bit that is transmitted along with the set of sub-carriers and the OFDM symbol indices. A value of '1' indicates to the terminal that SC-FDMA spreading is active for uplink transmission, while a value of '0' indicates that OFDMA transmission is to be used. This signaling procedure assumes that the base station has knowledge regarding the capabilities of the terminal, i.e., whether or not it is capable of SC-FDMA transmission.

Although the invention has been described by way of examples of preferred embodiments, it is to be understood that various other adaptations and modifications can be made within the scope of the invention. Therefore, it is the object of the appended claims to cover all such variations and modifications as come within the true scope of the invention.

**Claims**

1. A method for communicating symbols in a cell of a multiple-input multiple-output, MIMO, network including a set of mobile stations and a base station, wherein the symbols are communicated using orthogonal frequency division multiplexing, OFDM, and time division duplex, TDM, comprising the steps of:

   constructing a frame for communicating the symbols between the base station and the mobile station, wherein the frame is partitioned into a downlink subframe for communicating the symbols from the base station to the mobile station, and an uplink subframe for communicating the symbols from the mobile station to the base station;
   partitioning the uplink subframe into a first zone and a second zone, wherein the first zone uses orthogonal frequency division multiple access, OFDMA, and the second zone uses single carrier frequency division multiple acces, SC-FDMA; and
   transmitting the uplink subframe from the mobile station to the base station,
   wherein an entire symbol with a number of sub-carriers is assigned to a single mobile station, all sub-carriers of the symbol carrying data for said single mobile station.

2. The method of claim 1, wherein the set of mobile station in the cell concurrently communicate with the base station using both the OFDMA of the first zone and the SC-FDMA of the second zone.

3. The method of Figure 1, wherein a transmitter of a particular mobile station selectively performs a discrete Fourier transform, DFT to spread symbols over sub-carriers for the SC-FDMA.

4. The method of claim 1, wherein an arrangement of the first zone and the second zone is arbitrary.

5. The method of claim 4, wherein the arrangement is determined by the base station.

6. The method of claim 4, wherein the arrangement depends on a number of the set of mobile station operating in the OFDMA and SC-FDMA mode.

7. The method of claim 4, wherein the arrangement of the zones is specified by a an index of a starting symbol and a number of consecutive symbols in each zone.

8. The method of claim 7, further comprising:

   broadcasting the index and length as control symbols in the downlink subframe.

9. The method of claim 1, further comprising:

   mapping the symbols to contiguous sub-carriers in the second zone.

10. The method of claim 1, further comprising:

    interleaving the symbols among sub-carriers in the second zone.

**Patentansprüche**

1. Verfahren zum Übertragen von Symbolen in einer Zelle eines Netzes mit mehreren Eingängen und mehreren Ausgängen, MIMO, das einen Satz von mobilen Stationen und eine Basisstation enthält, wobei die Symbole unter Verwendung von Orthogonalfrequenzmultiplex, OFDM, und Zeitduplex, TDM, übertragen werden, aufweisend die Schritte:

   Bilden eines Rahmens für die Übertragung der Symbole zwischen der Basisstation und der mobilen Station, wobei der Rahmen in einen Abwärtsstrecken-Subrahmen zum Übertragen der Symbole von der Basisstation zu der mobilen Station und einen Aufwärtsstrecken-Subrahmen zum Übertragen der Symbole von der mobilen Station zu der Basisstation geteilt ist;
   Teilen des Aufwärtsstrecken-Subrahmens in eine erste Zone und eine zweite Zone, wobei die erste Zone einen Orthogonalfrequenzvielfachzugriff, OFDMA, verwendet, und die zweite Zone einen Einzelträger-Frequenzvielfachzugriff, SC-FDMA, verwendet; und
   Übertragen des Aufwärtsstrecken-Subrahmens von der mobilen Station zu der Basisstation, wobei ein ganzes Symbol mit einer Anzahl von Subträgern einer einzelnen mobilen Station zugewiesen ist und alle Subträger des Symbols Daten für die einzelne mobile Station tragen.

2. Verfahren nach Anspruch 1, bei dem der Satz von mobilen Stationen in der Zelle, die gleichzeitig mit der Basisstation kommunizieren, sowohl den OFDMA der ersten Zone als auch den SC-FDMA der zweiten Zone verwenden.

3. Verfahren nach Anspruch 1, bei dem ein Sender einer bestimmten mobilen Station selektiv eine diskrete Fourier-Transformation, DFT, durchführt, um Symbole über Subträger für den SC-FDMA zu streuen.

4. Verfahren nach Anspruch 1, bei dem eine Anordnung aus der ersten Zone und der zweiten Zone beliebig ist.

5. Verfahren nach Anspruch 4, bei dem die Anordnung durch die Basisstation bestimmt wird.

6. Verfahren nach Anspruch 4, bei dem die Anordnung von einer Nummer des Satzes von mobilen Stationen, die in dem OFDMA- und dem SC-FDMA-Betrieb arbeiten, abhängt.

7. Verfahren nach Anspruch 4, bei dem die Anordnung der Zonen spezifiziert ist durch einen Index eines Startsymbols und eine Anzahl von aufeinanderfolgenden Symbolen in jeder Zone.

8. Verfahren nach Anspruch 7, weiterhin aufweisend:

Rundsenden des Index und der Länge als Steuersymbole in dem Abwärtsstrecken-Subrahmen.

9. Verfahren nach Anspruch 1, weiterhin aufweisend:

Kartieren der Symbole auf benachbarte Subträger in der zweiten Zone.

10. Verfahren nach Anspruch 1, weiterhin aufweisend:

Verschachteln der Symbole zwischen Subträgern in der zweiten Zone.

**Revendications**

1. Procédé destiné à communiquer des symboles dans une cellule d'un réseau à entrées multiples et à sorties multiples, MIMO, qui comprend un ensemble de stations mobiles et une station de base, dans lequel les symboles sont communiqués en utilisant un multiplexage par répartition orthogonale de la fréquence, OFDM, et un duplexage par répartition dans le temps, TDM, comprenant les étapes consistant à :

construire une trame de façon à communiquer les symboles entre la station de base et la station mobile, dans lequel la trame est partitionnée en une sous-trame de liaison descendante de façon à communiquer les symboles à partir de la station de base vers la station mobile, et en une sous-trame de liaison montante de façon à communiquer les symboles à partir de la station mobile vers la station de base ;
partitionner la sous-trame de liaison montante en une première zone et en une seconde zone, dans laquelle la première zone utilise un accès multiple par répartition orthogonale de la fréquence, OFDMA, et la seconde zone utilise un accès multiple par répartition en fréquence à porteuse unique, SC - FDMA ; et
transmettre la sous-trame de liaison montante à partir de la station mobile vers la station de base ;
dans lequel un symbole entier avec un certain nombre de sous-porteuses est attribué à une seule station mobile, toutes les sous-porteuses du symbole acheminant des données de ladite seule station mobile.

2. Procédé selon la revendication 1, dans lequel l'ensemble de stations mobiles dans la cellule communiquent de manière simultanée avec la station de base en utilisant l'OFDMA de la première zone et le SC - FDMA de la seconde zone.

3. Procédé selon la revendication 1, dans lequel un émetteur d'une station mobile particulière exécute de manière sélective une transformée de Fourier discrète, DFT, de façon à étaler des symboles sur des sous-porteuses du SC - FDMA.

4. Procédé selon la revendication 1, dans lequel un agencement de la première zone et de la seconde zone est arbitraire.

5. Procédé selon la revendication 4, dans lequel l'agencement est déterminé par la station de base.

6. Procédé selon la revendication 4, dans lequel l'agencement dépend d'un certain nombre de stations mobiles dans l'ensemble de stations mobiles qui fonctionnent dans le mode OFDMA et dans le mode SC - FDMA.

7. Procédé selon la revendication 4, dans lequel l'agencement des zones est spécifié par un index d'un symbole de début et d'un certain nombre de symboles consécutifs dans chaque zone.

**8.** Procédé selon la revendication 7, comprenant en outre une étape consistant à :

> diffuser l'index et la longueur en tant que symboles de commande dans la sous-trame de liaison descendante.

**9.** Procédé selon la revendication 1, comprenant en outre une étape consistant à:

> mapper les symboles vers des sous-porteuses contiguës dans la seconde zone.

**10.** Procédé selon la revendication 1, comprenant en outre une étape consistant à :

> entrelacer les symboles parmi des sous-porteuses dans la seconde zone.

Fig. 1A

# Fig. 1B
## Prior Art

101
{$x_n$}

100
Sub-carrier mapping

110
M-point IDFT

120
Add CP/PS

130
DAC/RF

135
Channel

140
ADC/RF

150
Remove CP

160
M-point DFT

170
Sub-carrier De-mapping & Equalization

180
Detect

EP 2 232 757 B1

## Fig. 2
## Prior Art

101
{$x_n$} →  **N-point DFT** (290) → **Sub-carrier mapping** (200) → **M-point IDFT** (210) → **Add CP/PS** (220) → **DAC/RF** (230) →

135 **Channel**

**Detect** (280) ← **N-point IDFT** (291) ← **Sub-carrier De-mapping Equalization** (270) ← **M-point DFT** (260) ← **Remove CP** (250) ← **ADC/RF** (240) ←

EP 2 232 757 B1

## Fig. 3
## Prior Art

Time (OFDM Symbols)

Frequency
(Sub Channel Grouping)

EP 2 232 757 B1

# Fig. 4

**Time (OFDM Symbols)**

| | $K_{DI}$ | ... | | | | $K_o$-1 | $K_o$ | $K_S$ | ... | | | | K-1 | K |
|---|---|---|---|---|---|---|---|---|---|---|---|---|---|---|
| 0 | | | | | | | | | | | | | | |
| 1 | | | | | | | | | | | | | | |
| 2 | | | | | | | | | | | | | | |
| 3 | | | | | | | | | | | | | | |
| 4 | | | | UpLink OFDMA Zone | | | | | UpLink SC-FDMA Zone | | | | | |
| ↓ | | | | | | | | | | | | | | |
| | | | | | | | | | | | | | | |
| | | | | | | | | | | | | | | |
| C | | | | | | | | | | | | | | |

401      402

**Frequency
(Sub Channel Grouping)**

303

EP 2 232 757 B1

# Fig. 5

## Fig. 6

EP 2 232 757 B1

Fig. 7

Fig. 8

EP 2 232 757 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006011753 A

**Non-patent literature cited in the description**

- **H.G. Myung et al.** Single Carrier FDMA for Uplink Wireless Transmission. *IEEE Vehicular Technology Magazine,* September 2006, 30-38

- **Marks, R. et al.** 802.16m Frame Structure to Enable Legacy Support, Technology Evolution and Reduced Latency. *IEEE 802.16 BROADBAND WIRELESS ACCESS WORKING GROUP,* 07 November 2007, 1-7